# EUROPEAN PATENT SPECIFICATION

(11) **EP 1 517 051 B1**
(45) Date of publication and mention of the grant of the patent: **02.11.2006**
(21) Application number: 04425680.8
(22) Date of filing: 14.09.2004
(51) Int. Cl.: F16B 13/14, F16B 12/04

(54) **Hinge for wall fastening by chemical resin**
Durch chemisches Harz befestigter Wandbeschlag
Charnière de paroi fixée par une résine chimique

(30) Priority: 19.09.2003 IT BS20030084
(43) Date of publication of application: 23.03.2005
(73) Proprietor: Ardesi Serramenti di Ardesi Enrico & C. S.n.c., 25063 Marcheno (BS) (IT)
(72) Inventor: Ardesi, Paolo, Localita'Brozzo 25063 Marcheno (IT)
(74) Representative: Crippa, Paolo Ernesto

(56) References cited:
- EP-A- 1 058 012
- EP-A- 1 179 649
- CH-A- 668 286

## Description

The present invention concerns a hinge, in particular, but not exclusively, for shutters, designed for wall fastening by chemical resin.

Hinges for shutters are already frequently set with chemical resin, in other words with chemical fastening by injection for perforated material and walling. The fastening procedure of the hinge foresees drilling the wall, cleaning the hole using cleaning brushes, compressed air or aspirators, injecting the chemical fastening substance and then inserting the hinge.

The disadvantage of this procedural method however is that it is difficult to measure the quantity of fastening substance needed, since the coupling between the hole and hinge takes place with the fastening substance already injected, and rather significant quantities of the fastening substance can fall into the interstices of the material composing the wall. Consequently, it is often necessary to carry out further operations of injecting additional fastening substance.

On the other hand, if an excessive amount of resin is injected, it then becomes necessary to remove the excess quantity, which results in the difficulty in uniformly levelling the fastening substance that appears on the surface around the hinge, remembering that the wall is in fact already finished and indeed often painted. This problem could be resolved with a covering washer to prevent a subsequent injection of the fastening substance, if enough was not injected or fell into the wall interstices.

In any case, excessive handling and use of the fastening substance can prove harmful and dangerous, since this substance is harmful to health.

An attempt to overcome these drawbacks has already been made, as described in CH-A-668 286. This document discloses a hinge for shutter having a stem in which a longitudinal cavity is provided for receiving a chemical fastening substance. The stem has a plurality of radial openings which allow the fastening substance to come out from the cavity and fill the hole in the wall.

On the basis of these premises, the object of the present invention is to propose a hinge, in particular for shutters, suitable for wall fastening by chemical resin, said hinge presenting structural and functional features to resolve the problems stated in the prior art and allow it to be used more efficiently, easily and safely than the hinge disclosed in CH-A- 668 286.

This object is achieved with a hinge according to claim 1.

Further details and advantages of the hinge according to the present invention will result even more clearly from the following description reported below of a preferred exemplary embodiment, which is not limiting, with reference to the accompanying drawings, wherein:

Figure 1 represents an exploded perspective view of the hinge according to the invention;

Figure 2 represents an axial section of the hinge applied to a wall; and

Figure 3 represents a perspective view of a slit in the wall, in which the hinge is inserted.

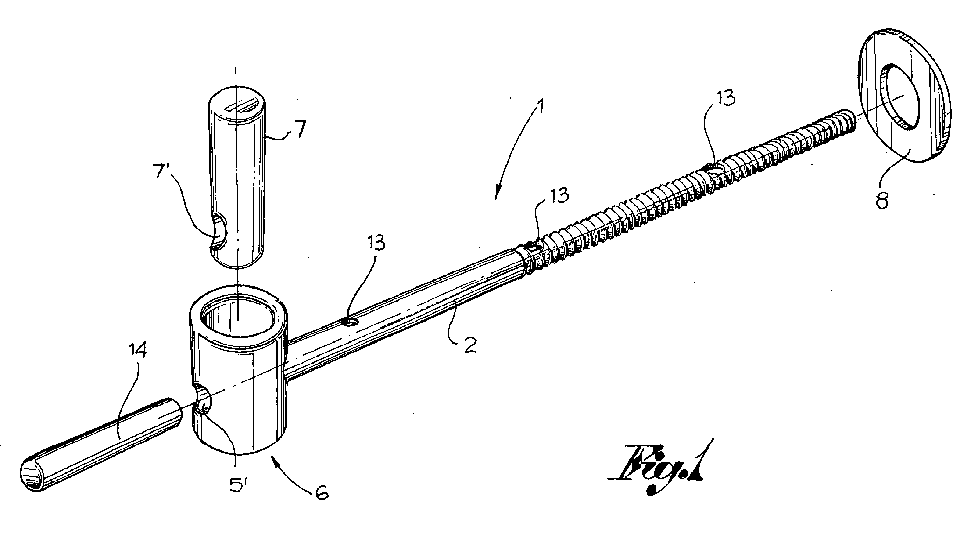

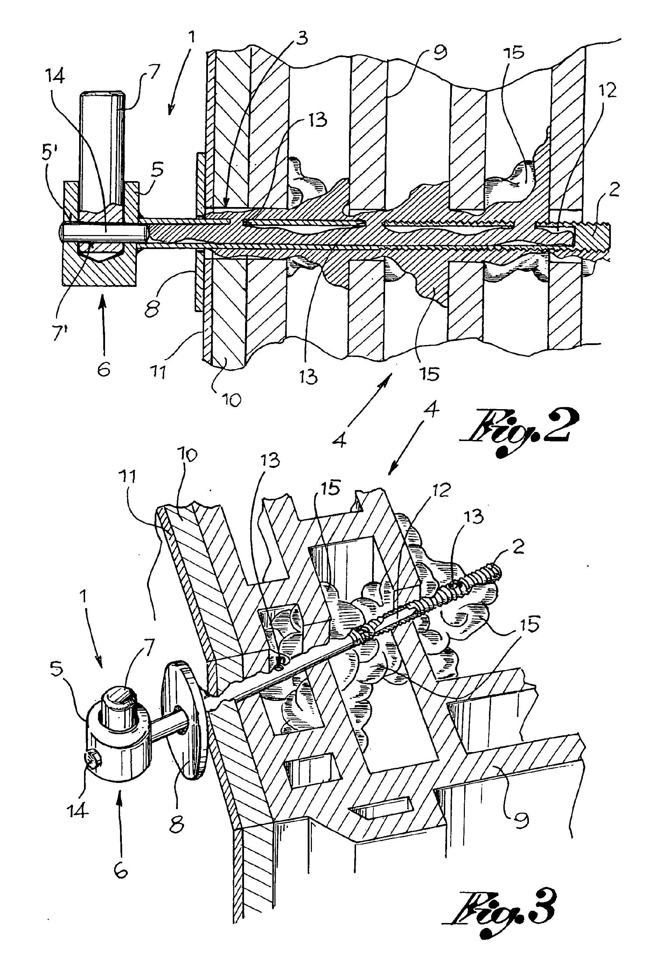

In said figures, a hinge according to the invention is globally indicated with reference numeral 1. The hinge 1 comprises a stem or shank 2 designed for most of its length to be inserted into a hole 3 made in a wall 4. For example, the wall 4 is made of perforated material 9 and presents plaster for reinforcement and levelling 10, as well as plaster for finishing or covering 11.

The stem 2 presents a proximal end, which protrudes from the wall 4 face, when the hinge is fixed during the work. A pin 7 extends from said proximal end of the stem 2, suitable for coupling with a corresponding hinge element of a frame (not represented). The pin 7 is preferably orthogonal at the stem 2.

According to an advantageous embodiment of the invention, the pin 7 is received in a sleeve 5 provided at the proximal end of the stem 2. Advantageously, said sleeve 5 presents a stop 6 at the bottom on which the pin 7 rests. Moreover, advantageously, the pin 7 and the sleeve 5 are configured for geometric coupling. For example, said pin and sleeve present a cylindrical shape.

Moreover, the hinge comprises a washer 8 placed around the shank or stem 2.

According to the invention, a cavity 12 is made longitudinally in the stem or shank 2 that is open at the level of the proximal end of the stem 2 and communicating with the outside by means of at least one further opening 13 made in the portion of the stem designed to be inserted into the hole 3 in the wall 4.

Said opening 13 is preferably a radial opening. In other words, it is made in the stem 2 substantially in an orthogonal direction in relation to the longitudinal cavity 12. The opening 13, for example, is circular shaped.

According to a particularly advantageous embodiment, at least three radial openings 13 are made in the stem 2 and arranged longitudinally along the stem or shank 2. Said radial openings 13 are preferably distributed along the whole extension of the portion of the stem designed to be inserted into the hole 3 in the wall 4. Preferably, said radial openings 13 are also substantially facing in the same direction, and in particular facing upwards when the stem is inserted into the wall 4.

According to a preferred embodiment of the invention, the size of the radial openings 13 increases with the increase in their distance from the proximal end of the stem 2.

Furthermore, the longitudinal cavity 12 is preferably closed on a level with the distal end of the stem or shank 2.

According to a preferred embodiment illustrated in the figures, the sleeve 5 presents a radial hole 5' aligned with the cavity 12 of the stem or shank 2; correspondingly, the pin 7 presents a transversal hole 7', which coincides with the radial hole 5' when the pin 7 is inserted into the sleeve 5.

Advantageously, a transversal peg 14 can be inserted into said aligned holes 5' and 7' to lock the pin 7 to the sleeve 5.

Advantageously, the transversal hole 7' of the pin 7 is clearing and the peg 14 extends so that, when it is inserted into the sleeve 5 and pin 7 through the relative holes 5' and 7', its distal end reaches the cavity 12 in the stem or shank 2. Besides serving to lock the pin 7 in the sleeve 5, the peg 14 acts as a plug for the cavity 12 and as an element for reinforcing the stem or shank 2.

When the hinge has to be mounted, the hole 3 in the wall 4 is made taking care to clean the inside of this hole from dust and debris to encourage the chemical fastening substance to stick. Then the stem or shank 2 of the hinge 1, already equipped with the washer 8, is inserted into the hole 3. The pin 7 is inserted into the sleeve 5 so that the relative holes 5' and 7'are aligned. A chemical fastening substance 15, for example a bicomponent polyester resin, is injected through the holes 5', 7' in the cavity 12 inside the stem or shank 2 by means of a specific injecting device. The resin reaches and fills the hole 3 in the wall 4 through the radial openings 13, using the stem or shank 2, around which it deposits, as a rest and support.

It shall be noted that the number, form and size of the radial openings 13 are chosen to encourage a sufficiently uniform distribution of the fastening substance in the hole 3 in the wall. In particular, the increasing size of the openings compensates the greater distance in relation to the point of injection.

Closure of the cavity 12 near the distal end of the shank or stem 2 is particularly useful when using a resin that is not very viscous.

Advantageously, the operator is able to measure a correct quantity of the fastening substance, since the above described fastening procedure means that it is possible to see the chemical fastening substance when it appears on the surface out of the hole 3 around the stem 2, if the washer 8 is kept detached from the wall face, or to detect the thrust exerted by the fastening substance on the washer 8, if this is kept close to the face. In any case, the washer 8 is measured so that it completely covers the hole 3 in the wall.

Finally, the peg 14 is applied to the hinge to close the cavity 12 and block the pin 7. It shall be noted that, with the hinge according to the invention, it is not necessary for the peg 14 to be inserted with force into the sleeve 5 and into the pin, since the peg 14 is blocked by the fastening substance itself. In this way it is avoided the pin 7 from unthreading from the sleeve 5, whether caused by wear and tear (which produces a sort of threaded coupling in time between the pin and the sleeve) or intentionally (for example whilst attempting to open the frame).

As will be recognized, the above described procedure for realizing the hinge is quick and easy; it also makes it possible to avoid the chemical fastening substance from coming out of the hole 3 in the wall, and saves the operator from making operations of adding and trowelling the resin, keeping him safer in view of the danger involved in breathing in and coming into contact with this substance.

Obviously, a person skilled in the art could make further modifications and variations to the hinge according to the present invention in order to satisfy specific contingent needs.

One or more longitudinal slits can be provided, for example, in the stem 2 in place of the radial openings 13, which advantageously increase in width towards the distal end of the stem.

## Claims

1. Hinge, particularly for shutters, suitable for being fastened in a hole (3) in a wall (4) with a chemical fastening substance, such as a resin, comprising a stem or shank (2) designed to be inserted into said hole in the wall, and a pin (7) extending orthogonally from the proximal end of said stem protruding from the wall, wherein a cavity (12) extends longitudinally in said stem or shank (2), which opens from the side of the pin (7) to allow the chemical fastening substance to be injected inside, when the stem or shank is inserted into the hole in the wall, and communicating with the outside by at least one further opening (13) in the stem or shank (2) to allow the fastening substance to come out from the cavity (12) in the hole (3), **characterised in that** the pin (7) is inserted into a sleeve (5) provided at the proximal end of the stem or shank (2) and communicating with cavity (12), said sleeve (5) and said pin (7) present respective radial holes (5', 7') aligned with the cavity (12), and **in that** it further comprises a peg (14) designed to be inserted at least into the proximal end of the cavity (12) passing through said radial holes (5', 7') to lock pin (7) and to act as a plug once the chemical fastening substance has been injected.

2. Hinge according to claim 1, wherein said additional opening (13) is made radially in relation to the longitudinal cavity (12).

3. Hinge according to claim 1 or 2, wherein said cavity (12) is closed at the level of the distal end of the stem or shank (2).

4. Hinge according to claim 2 or 3, wherein a plurality of radial openings (13) is made in the stem or shank (2), said openings being distributed longitudinally along said stem or shank (2).

5. Hinge according to claim 4, wherein said radial openings (13) present an increasing size with the increasing distance from the proximal end of the stem or shank (2).

6. Hinge according to claim 5, wherein said radial openings (13) are facing in the same direction, preferably upwards when the hinge is inserted into the hole in the wall.

7. Hinge according to any one of the previous claims, also comprising a washer (8) around the stem or shank (2) and suitable for covering the hole (3) in the wall.

8. Hinge according to anyone of the previous claims, wherein said sleeve (5) presents a stop at the bottom (6).

## Patentansprüche

1. Beschlag bzw. Scharnier, insbesondere für Verschlüsse, der bzw. das fähig ist, in einem Loch (3) in einer Wand (4) mit einer chemischen Befestigungssubstanz, wie einem Harz befestigt zu werden, umfassend einen Stiel oder Schaft (2), der ausgebildet ist, um in das Loch in der Wand eingesetzt zu werden, und einen Zapfen (7), der sich orthogonal von dem proximalen bzw. vorderen Ende des Stiels bzw. Stabs erstreckt, der von der Wand vorragt, wobei sich ein Hohlraum (12) in Längsrichtung in dem Stiel oder Schaft (2) erstreckt, welcher von der Seite des Zapfens (7) öffnet, um es der chemischen Befestigungs- bzw. Festlegungssubstanz zu ermöglichen, ins Innere eingespritzt zu werden, wenn der Stiel oder Schaft in das Loch in der Wand eingesetzt ist, und mit der Außenseite durch wenigstens eine weitere Öffnung (13) in dem Stiel oder Schaft (2) kommuniziert bzw. in Verbindung steht, um es der Befestigungssubstanz zu ermöglichen, aus dem Hohlraum (12) in dem Loch (3) auszutreten, **dadurch gekennzeichnet, daß** der Zapfen (7) in eine Hülse (5) eingesetzt ist, die an dem proximalen Ende des Stiels oder Schafts (2) zur Verfügung gestellt ist und mit dem Hohlraum (12) kommuniziert, wobei die Hülse (5) und der Zapfen (7) entsprechende radiale Löcher (5', 7') aufweisen, die mit dem Hohlraum (12) ausgerichtet sind, und daß er weiterhin einen Stift (14) umfaßt, der ausgebildet ist, um wenigstens in das proximale Ende des Hohlraums (12) eingesetzt zu sein, der durch die radialen Löcher (5', 7') hindurchtritt, um den Zapfen (7) zu sperren bzw. zu arretieren und als ein Stopfen zu wirken, sobald die chemische Befestigungssubstanz eingespritzt wurde.

2. Beschlag nach Anspruch 1, wobei die zusätzliche Öffnung (13) radial in Bezug auf den in Längsrichtung verlaufenden Hohlraum (12) gemacht ist.

3. Beschlag nach Anspruch 1 oder 2, wobei der Hohlraum (12) auf dem Niveau des distalen Endes des Stiels oder Schafts (2) geschlossen ist.

4. Beschlag nach Anspruch 2 oder 3, wobei eine Mehrzahl von radialen Öffnungen (13) in dem Stiel oder Schaft (2) hergestellt ist, wobei die Öffnungen in Längsrichtung entlang des Stiels oder Schafts (2) verteilt sind.

5. Beschlag nach Anspruch 4, wobei die radialen Öffnungen (13) eine ansteigende Größe mit ansteigendem Abstand von dem proximalen Ende des Stiels oder Schafts (2) aufweisen.

6. Beschlag nach Anspruch 5, wobei die radialen Öffnungen (13) in dieselbe Richtung, vorzugsweise nach oben schauen bzw. gerichtet sind, wenn der Beschlag in das Loch in der Wand eingesetzt ist.

7. Beschlag nach einem der vorhergehenden Ansprüche, auch umfassend eine Beilagscheibe (8) um den Stiel oder Schaft (2), und die geeignet ist, das Loch (3) in der Wand abzudecken.

8. Beschlag nach einem der vorhergehenden Ansprüche, wobei die Hülse (5) einen Anschlag an dem Boden (6) aufweist.

## Revendications

1. Charnière, en particulier pour des volets, appropriée pour être fixée dans un trou (3) dans un mur (4) avec une substance chimique de fixation, telle qu'une résine, comprenant une tige ou queue (2) conçue pour être insérée à l'intérieur dudit trou dans le mur, et une cheville (7) qui s'étend de façon orthogonale à partir de l'extrémité proximale de ladite tige qui est en protubérance depuis le mur, dans laquelle une cavité (12) s'étend longitudinalement dans ladite tige ou queue (2), qui s'ouvre depuis le coté de la cheville (7) pour permettre à la substance chimique de fixation d'être injectée à l'intérieur, lorsque la tige ou queue est insérée à l'intérieur du trou dans le mur, et communiquant avec l'extérieur par au moins une ouverture (13) en plus dans la tige ou queue (2) pour permettre à la substance de fixation de sortir de la cavité (12) dans le trou (3), **caractérisée en ce que** la cheville (7) est insérée dans un manchon (5) fourni au niveau de l'extrémité proximale de la tige ou queue (2) et communiquant avec la cavité (12), ledit manchon (5) et ladite cheville présentent des trous radiaux respectifs (5',7') alignés avec la cavité (12), et **en ce qu'**elle comprend en plus un piquet (14) conçu pour être inséré au moins à l'intérieur de l'extrémité proximale de la cavité (12) passant à travers lesdits trous radiaux (5',7') pour verrouiller la cheville (7) et pour faire office d'un bouchon dès que la substance chimique de fixation a été injectée.

2. Charnière selon la revendication 1, dans laquelle ladite ouverture additionnelle (13) est établie radialement en relation avec la cavité longitudinale (12) .

3. Charnière selon la revendication 1 ou 2, dans laquelle ladite cavité (12) est fermée au niveau de l'extrémité distale de la tige ou queue (2).

4. Charnière selon la revendication 2 ou 3, dans laquelle une pluralité d'ouvertures radiales (13) sont établies dans la tige ou queue (2), lesdites ouvertures étant distribuées longitudinalement le long de ladite tige ou queue (2).

5. Charnière selon la revendication 4, dans laquelle lesdites ouvertures radiales (13) présentent un volume augmentant avec l'augmentation de distance depuis l'extrémité proximale de la tige ou queue (2).

6. Charnière selon la revendication 5, dans laquelle lesdites ouvertures radiales (13) se font face dans la même direction, de préférence de façon ascendante lorsque la charnière est insérée dans le trou (3) dans le mur.

7. Charnière selon l'une quelconque des revendications précédentes, comprenant également une rondelle (8) autour de la tige ou queue (2) et appropriée pour couvrir le trou (3) dans le mur.

8. Charnière selon l'une quelconque des revendications précédentes, dans laquelle ledit manchon (5) présente un arrêt au niveau du fond.
